# EUROPÄISCHE PATENTANMELDUNG

(11) **EP 1 707 792 A2**
(43) Veröffentlichungstag der Anmeldung: **04.10.2006**
(21) Anmeldenummer: 06005316.2
(22) Anmeldetag: 15.03.2006
(51) Int. Cl.: F02M 51/06

(54) **Brennkraftmaschine und Einspritzeinrichtung**

(30) Priorität: 19.03.2005 DE 102005012757
(71) Anmelder: MAN B&W Diesel AG, 86224 Augsburg (DE)
(72) Erfinder: Terbeck, Stefan, 86152 Augsburg (DE); Böckhoff, Nicolaus, 86551 Aichach (DE)
(74) Vertreter: Schober, Stefan

(57) **Zusammenfassung**

Die Erfindung betrifft eine Brennkraftmaschine, insbesondere einen Gasmotor, mit einer Hauptbrennkammer (11) und mindestens einer über eine Ausblasöffnung (17) bzw. Ausblasleitung mit der Hauptbrennkammer (11) in Verbindung stehende Vorkammer (12), wobei in die oder jede Vorkammer (12) Brennstoff, insbesondere Brenngas, über mindestens eine der jeweiligen Vorkammer (12) zugeordnete Einspritzeinrichtung (19) einspritzbar ist, und wobei die oder jede Einspritzeinrichtung (19) eine betätigbare Düsennadel (20) aufweist, die je nach Position derselben eine Einspritzöffnung (23) der Einspritzeinrichtung (19) verschließt bzw. öffnet. Erfindungsgemäß ist die Düsennadel (20) der oder jeder Einspritzeinrichtung (19) unmittelbar durch einen ansteuerbaren Magnet (25) derart betätigbar, dass bei bestromtem Magnet (25) derselbe die Düsennadel (20) entgegen einer Schließkraft eines Federelements (24) unter Freigabe der Einspritzöffnung (23) anzieht, und dass bei unbestromtem Magnet (25) das Federelement (24) die Düsennadel (20) unter Verschluss der Einspritzöffnung (23) gegen dieselbe drückt.

## Beschreibung

Die Erfindung betrifft eine Brennkraftmaschine, insbesondere einen Gasmotor, nach dem Oberbegriff des Anspruchs 1. Des Weiteren betrifft die Erfindung eine Einspritzeinrichtung nach dem Oberbegriff des Anspruchs 3.

Selbstzündende Brennkraftmaschinen, wie z. B. Gasmotoren, verfügen über eine Hauptbrennkammer, in welche Brennstoff und Verbrennungsluft bzw. ein Brennstoff/Verbrennungsluft-Gemisch angesaugt wird, wobei der Brennstoff in der Hauptbrennkammer verbrannt und Abgas aus der Hauptbrennkammer ausgeführt wird. Mit der Hauptbrennkammer steht mindestens eine Vorkammer über eine Ausblasöffnung bzw. Ausblasleitung in Verbindung. In die oder jede Vorkammer wird über mindestens eine der jeweiligen Vorkammer zugeordnete Einspritzeinrichtung Brennstoff eingespritzt, wobei die oder jede Einspritzeinrichtung jeweils eine betätigbare Düsennadel aufweist, die je nach Position derselben eine Einspritzöffnung der jeweiligen Einspritzeinrichtung verschließt bzw. öffnet. Derartige Brennkraftmaschinen sind aus der DE 44 19 429 C2 und der DE 196 21 297 C1 bekannt.

Nach dem Stand der Technik werden die Düsennadeln der Einspritzeinrichtungen entweder mechanisch über eine Steuerkurve oder hydraulisch bzw. pneumatisch betätigt. Hierdurch ergeben sich relativ lange Schaltzeiten für die Einspritzeinrichtungen.

Hiervon ausgehend liegt der vorliegenden Erfindung das Problem zugrunde, eine neuartige Brennkraftmaschine sowie eine neuartige Einspritzeinrichtung zu schaffen.

Dieses Problem wird durch eine Brennkraftmaschine gemäß Anspruch 1 gelöst. Erfindungsgemäß ist die Düsennadel der oder jeder Einspritzeinrichtung unmittelbar durch einen ansteuerbaren Magnet derart betätigbar, dass bei bestromtem Magnet derselbe die Düsennadel entgegen einer Schließkraft eines Federelements unter Freigabe der Einspritzöffnung anzieht, und dass bei unbestromtem Magnet das Federelement die Düsennadel unter Verschluss der Einspritzöffnung gegen dieselbe drückt.

Erfindungsgemäß wird eine Brennkraftmaschine vorgeschlagen, wobei eine der Vorkammer zugeordnete Einspritzeinrichtung derart ausgeführt ist, dass die Düsennadel der Einspritzeinrichtung direkt bzw. unmittelbar über einen Magnet betätigbar ist. Zum Öffnen einer Einspritzöffnung zieht ein bestromter Magnet eine Düsennadel entgegen einer Schließkraft eines Federelements an. Bei unbestromtem Magnet drückt das Federelement die Düsennadel unter Verschluss der Einspritzöffnung gegen dieselbe.

Mit der Erfindung lassen sich geringe Schaltzeiten an einer Einspritzeinrichtung in einer Größenordnung von ein bis zwei Millisekunden realisieren. Weiterhin können Hübe einer Düsennadel der Einspritzeinrichtung exakt eingestellt werden. Da die Düsennadel direkt bzw. unmittelbar von einem Magnet betätigt wird, ist kein zusätzliches Steuermedium erforderlich. Weiterhin arbeitet die Einspritzeinrichtung schmiermittelfrei.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:
- Fig. 1:: ein Blockschaltbild einer Brennkraftmaschine; und
- Fig. 2:: eine stark schematisierte Darstellung einer erfindungsgemäßen Einspritzeinrichtung der Brennkraftmaschine.

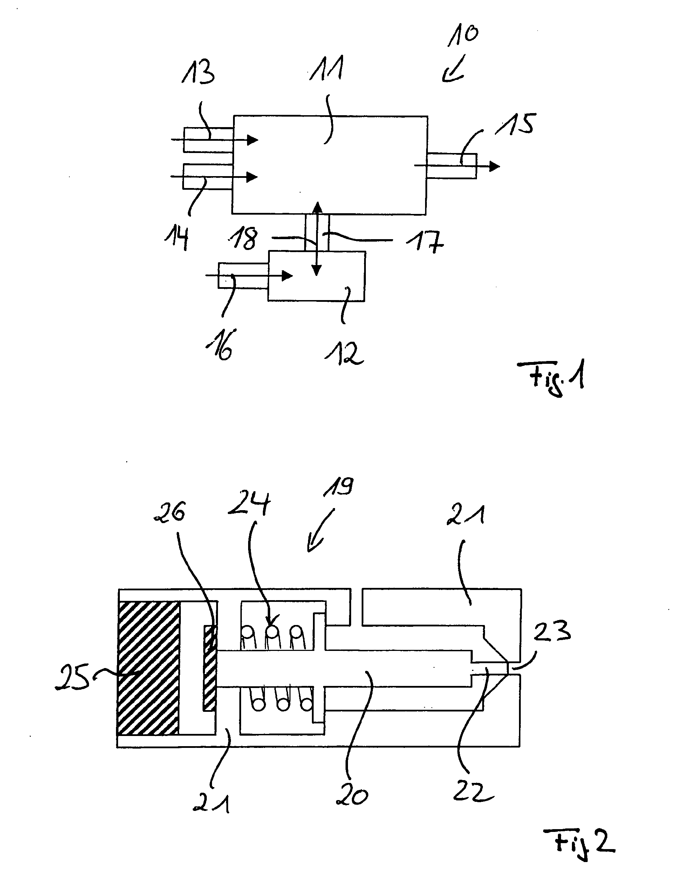

Nachfolgend wird die hier vorliegende Erfindung unter Bezugnahme auf Fig. 1 und 2 in größerem Detail beschrieben.

Fig. 1 zeigt ein stark schematisiertes Blockschaltbild einer erfindungsgemäßen Brennkraftmaschine 10, die eine Hauptbrennkammer 11 sowie eine Vorkammer 12 umfasst. In die Hauptbrennkammer 11 der Brennkraftmaschine 10, die vorzugsweise als selbstzündender Gasmotor ausgeführt ist, gelangt im Sinne der Pfeile 13 und 14 Brennstoff sowie Verbrennungsluft bzw. ein Gemisch aus Brennstoff und Verbrennungsluft. Innerhalb der Hauptbrennkammer 11 erfolgt eine Verbrennung des Brennstoffs, wobei im Sinne des Pfeils 15 Abgas aus der Hauptbrennkammer 11 abgeleitet wird.

In die Vorkammer 12 wird im Sinne des Pfeils 16 ebenfalls Brennstoff eingeführt. Die Vorkammer 12 steht über eine Ausblasöffnung 17 bzw. über eine Ausblasleitung mit der Hauptbrennkammer 11 in Kontakt, wobei zwischen der Hauptbrennkammer 11 und der Vorkammer 12 im Sinne des Doppelpfeils 18 abhängig von den Druckverhältnissen in der Hauptbrennkammer 11 ein Austausch der jeweiligen Medien erfolgt. Diese Details sind dem hier angesprochenen Fachmann geläufig und bedürfen keiner näheren Erläuterung.

Zum Zuführen des Brennstoffs in die Vorkammer 12 im Sinne des Pfeils 16 ist der Vorkammer 12 mindestens eine Einspritzeinrichtung 19 zugeordnet. Fig. 2 zeigt eine derartige Einspritzeinrichtung 19 in stark schematisierter Darstellung. Die Einspritzeinrichtung 19 der Fig. 2 verfügt über eine Düsennadel 20 die in einem Düsenhalter 21 bzw. einem Gehäuse geführt ist. In der Darstellung der Fig. 2 verschließt eine Spitze 22 der Düsennadel 20 eine Einspritzöffnung 23. Über die Einspritzöffnung 23 gelangt der Brennstoff in die Vorkammer 12.

Gemäß Fig. 2 wird die Düsennadel 20 über ein Federelement 24 zum Verschlie-βen der Einspritzöffnung 23 gegen die Einspritzöffnung 23 gedrückt. Die Betätigung der Düsennadel 20 zum Öffnen der Einspritzöffnung 23 erfolgt erfindungsgemäß direkt bzw. unmittelbar über einen Magnet 25. Der Magnet 25 ist als elektromagnetische Spule ausgeführt, die im bestromten Zustand die Düsennadel 20 entgegen der vom Federelement 24 bereitgestellten Schließkraft anzieht. In unbestromten Zustand des Magnet 25 drückt hingegen das Federelement 24 die Düsennadel 20 gegen die Einspritzöffnung 23 und verschließt dieselbe.

Der Magnet 25 wirkt in bestromten Zustand mit einer der Düsennadel 20 zugeordneten Anzugplatte 26 zusammen. Im bestromten Zustand zieht der Magnet 25 die Anzugplatte 26 und damit die Düsennadel 20 unter Freigabe der Einspritzöffnung 23 an.

Im Sinne der hier vorliegenden Erfindung wird demnach eine Düsennadel einer Einspritzeinrichtung einer Brennkraftmaschine unmittelbar bzw. direkt ohne Zwischenschaltung eines zusätzlichen Steuermediums betätigt. Hierdurch ist eine relativ kurze Schaltzeit bzw. Schaltdauer der Einspritzeinrichtung in einer Größenordnung von ein bis zwei Millisekunden realisierbar. Weiterhin sind definierte Nadelhübe der Düsennadel einstellbar. Die Einspritzeinrichtung arbeitet schmiermittelfrei. Im stromlosen Zustand drückt das Federelement die Düsennadel gegen die Einspritzöffnung und verschließt dieselbe.

### Bezugszeichenliste

- 10: Brennkraftmaschine
- 11: Hauptbrennkammer
- 12: Vorkammer
- 13: Pfeil
- 14: Pfeil
- 15: Pfeil
- 16: Pfeil
- 17: Ausblasöffnung
- 18: Doppelpfeil
- 19: Einspritzeinrichtung
- 20: Düsennadel
- 21: Düsenhalter
- 22: Spitze
- 23: Einspritzöffnung
- 24: Federelement
- 25: Magnet
- 26: Anzugplatte

## Patentansprüche

1. Brennkraftmaschine, insbesondere Gasmotor, mit einer Hauptbrennkammer (11) und mindestens einer über eine Ausblasöffnung (17) bzw. Ausblasleitung mit der Hauptbrennkammer (11) in Verbindung stehende Vorkammer (12), wobei in die oder jede Vorkammer (12) Brennstoff, insbesondere Brenngas, über mindestens eine der jeweiligen Vorkammer (12) zugeordnete Einspritzeinrichtung (19) einspritzbar ist, und wobei die oder jede Einspritzeinrichtung (19) eine betätigbare Düsennadel (20) aufweist, die je nach Position derselben eine Einspritzöffnung (23) der Einspritzeinrichtung (19) verschließt bzw. öffnet, **dadurch gekennzeichnet, dass** die Düsennadel (20) der oder jeder Einspritzeinrichtung (19) unmittelbar durch einen ansteuerbaren Magnet (25) derart betätigbar ist, dass bei bestromtem Magnet (25) derselbe die Düsennadel (20) entgegen einer Schließkraft eines Federelements (24) unter Freigabe der Einspritzöffnung (23) anzieht, und dass bei unbestromtem Magnet (25) das Federelement (24) die Düsennadel (20) unter Verschluss der Einspritzöffnung (23) gegen dieselbe drückt.

2. Brennkraftmaschine nach Anspruch 1, **dadurch gekennzeichnet, dass** der Düsennadel (20) eine Anzugplatte (26) zugeordnet ist, die vom Magnet (25) im bestromtem Zustand desselben angezogen wird.

3. Einspritzeinrichtung für eine Brennkraftmaschine, mit einer Düsennadel (20), die je nach Position derselben eine Einspritzöffnung (23) verschließt bzw. öffnet, **dadurch gekennzeichnet, dass** die Düsennadel (20) unmittelbar durch einen ansteuerbaren Magnet (25) derart betätigbar ist, dass bei bestromtem Magnet (25) derselbe die Düsennadel (20) entgegen einer Schließkraft eines Federelements (24) unter Freigabe der Einspritzöffnung (23) anzieht, und dass bei unbestromtem Magnet (25) das Federelement (24) die Düsennadel (20) unter Verschluss der Einspritzöffnung (23) gegen dieselbe drückt.
